# FASCICULE DE BREVET EUROPEEN

(11) **EP 4 031 780 B1**
(45) Date de publication et mention de la délivrance du brevet: **01.07.2026**
(21) Numéro de dépôt: 20760877.9
(22) Date de dépôt: 27.08.2020
(51) Int. Cl.: F16F 9/04

(54) **STRUCTURE CELLULAIRE GONFLABLE ET ARTICLE AINSI EQUIPE**
AUFBLASBARE ZELLULARE STRUKTUR UND GEGENSTAND DAMIT
INFLATABLE CELLULAR STRUCTURE AND ARTICLE EQUIPPED THEREWITH

(30) Priorité: 18.09.2019 FR 1910273
(43) Date de publication de la demande: 27.07.2022
(73) Titulaire: Pro Shop RXR, 14000 CAEN (FR)
(72) Inventeur: SCHULLER, David, 14000 Caen (FR)
(74) Mandataire: Regimbeau
(86) Numéro de dépôt international: PCT/EP2020/074028
(87) Numéro de publication internationale: WO 2021/052735

(56) Documents cités:
- US-A- 5 030 501
- US-A- 5 238 231
- US-A- 5 771 490

## Description

### DOMAINE TECHNIQUE GENERAL

La présente invention se situe dans le domaine des dispositifs de protection des individus, lorsque ces derniers chutent ou sont la cible d'un impact.

Elle a notamment trait à une structure cellulaire gonflable d'absorption de chocs.

### ETAT DE LA TECHNIQUE

On désigne couramment par "effet arrière" le mécanisme de flexion important dû au cône dynamique d'enfoncement généré par l'impact d'un projectile ou résultant d'une chute.

Il découle d'un transfert d'énergie cinétique vers le corps.

Des exemples des conséquences de l'effet arrière provoqués par une chute ou un projectile sur un corps humain sont donnés ci-après :
Les lésions pariétales quasi systématiques dont :
- Érosions et plaies cutanées ;
- Réaction vasomotrice cutanée ;
- Fractures d'os ;
- Effraction de la plèvre pariétale généralement associée aux fractures de côtes.

Les Lésions pulmonaires dont :
- Contusions et hémorragies pulmonaires ;
- Pneumothorax, embolies gazeuses et hémothorax ;
- Lésions abdominales.

Les lésions abdominales, en particulier concernant les organes pleins situés au contact de la paroi (foie, rate, reins).

Les lésions cardiaques.

Les lésions osseuses, fractures, souvent limitées à la zone au contact du cône de déformation, mais éventuellement associées à des fractures ou luxations à distance. On constate aussi des lésions de la colonne vertébrale et occasionnellement des lésions du dos.

Une solution pour mesurer l'effet arrière est d'avoir recours au « viscous criterion » ("VCmax") qui correspond au maximum du produit de la vitesse de déformation par le taux de compression rapporté à la déformation maximale en fonction du temps. Ce "VCmax" a l'avantage de n'utiliser que des données facilement accessibles et peut servir de base à des comparaisons entre les différentes solutions de protection.

En tout état de cause, l'effet arrière peut être à l'origine de lésions graves ou incapacitantes. Pour une même protection et un même projectile (ou des caractéristiques identiques de chute), la gravité des lésions ainsi que l'importance des paramètres physiques lors de l'impact sont liées à l'énergie d'impact du projectile ou de la chute et à sa vitesse de transmission au corps.

Ce problème est d'autant plus important que se sont développés récemment des gilets pare-balle souples, de sorte que sous l'effet d'un impact, le gilet se déforme vers l'arrière, transmettant ainsi une importante onde d'énergie.

Cependant, cette énergie cinétique au moment de l'impact ne correspond pas à l'énergie transmise au thorax. Elle est fonction de la protection en place entre ces deux derniers. Cette protection doit pouvoir se déformer suffisamment mais pas trop pour absorber l'énergie, sans gêner l'utilisateur.

Dans certains cas, on peut avoir recours à un "bouclier de tension" qui est disposé entre le thorax de l'individu et le gilet pare-balle qui a pour fonction de diffuser et d'absorber tout ou partie de l'énergie d'impact. Plus précisément, l'objectif d'un tel bouclier sur des impacts à très haute vitesse est de répartir les forces pour les diminuer. En pratique, un tel bouclier ne remplit pas parfaitement cette fonction. En tout état de cause, afin de comparer plusieurs types de protections, il est nécessaire d'établir un lien entre les lésions et la dynamique de déformation de la face arrière, c'est à dire celle qui est en contact avec le corps.

Ainsi, il existe des protections gonflables qui sont soit compartimentées, soit d'un seul tenant, ou comportent des soudures de cloisonnement, et ont pour principal inconvénient un encombrement (épaisseur) supérieur à 30mm, et une rigidité dépendant de leur pression de gonflage.

Leurs différents compartiments se trouvent fragilisés si la pression de gonflage est trop importante, à cause de leur volume d'air trop important. Il se comporte alors comme un ballon gonflable.

Par exemple, on décrit dans US 876 237 une protection gonflable à l'usage des joueurs de baseball, qui a pour objectif de diviser les parties gonflables qui la constituent, de sorte que dans le cas où l'une d'entre elles se perfore, les parties restantes restent gonflées pour continuer à assurer une protection. Il n'y a ici aucune logique de gestion de la pression entre les parties, mais simplement un souhait d'isoler les parties en cas de crevaison.

Dans US 3 550 159 est décrite une structure cellulaire adaptée pour être portée par une personne en vue de la protéger contre les chocs. On a affaire ici à une structure formée de plusieurs épaisseurs de cellules contiguës. Chaque cellule comprend deux grandes faces parallèles et quatre cloisons soudées auxdites grandes faces, de sorte qu'elle a la forme générale d'un parallélépipède rectangle. Des trous formés dans certaines cloisons permettent un passage d'air dans le sens de l'épaisseur et latéralement.

Le fait de superposer plusieurs couches de cellules est un inconvénient notable qui s'oppose à une utilisation ergonomique. Par ailleurs, en cas de gonflage excessif des cellules, celles-ci prennent la forme d'un ballon.

Dans le document US 3 995 320, on se propose de remédier aux inconvénients du document discuté ci-dessus. On a ici affaire à un assemblage par soudure de deux panneaux en matière plastique qui forment ici une juxtaposition de boudins longitudinaux qui communiquent avec leurs voisins par des nombreux canaux d'échappement d'air. L'inconvénient principal de ce type de structure est qu'en cas de choc, c'est la totalité du boudin impacté qui se déforme, cette déformation étant importante du fait du nombre élevé de canaux d'échappement d'air.

Un art antérieur supplémentaire est constitué par les documents US 5 771 490 (qui décrit les caractéristiques du préambule de la revendication 1 annexée), US 5 030 501 et US 5 238 231.

L'objectif de la présente invention est de proposer une structure de faible épaisseur qui, lorsqu'elle est fortement gonflée, permet de lutter efficacement contre "l'effet arrière", peut se déformer dans toutes les directions, tout en étant agréable à porter et permettant une grande liberté de mouvement pour son utilisateur.

### PRESENTATION DE L'INVENTION

Ainsi, l'invention se rapporte à un structure cellulaire gonflable d'absorption de chocs présentant les caractéristiques de la revendication 1. Dans une telle structure, il est notamment prévu que la structure soit constituée de deux feuilles étanches soudées l'une à l'autre selon des lignes de soudure qui délimitent des cellules gonflables,
- lesdites cellules gonflables sont agencées selon au moins une matrice bidimensionnelle de n lignes et m colonnes de cellules, n et m étant des nombres entiers égaux ou différents, chacun supérieur ou égal à 2,
- une cellule périphérique de ladite matrice est raccordée à un embout de gonflage ;
   qui est caractérisée par le fait que :
   - lesdites cellules sont non jointives ;
   - les cellules de la ligne et/ou de la colonne à laquelle appartient ladite cellule périphérique raccordée audit embout de gonflage communiquent de proche en proche par un canal de formant étranglement, ce canal étant un petit conduit qui s'étend entre deux cellules, sans en faire partie, tandis que chaque cellule restante de ladite matrice est également raccordée à au moins une des cellules voisines de la même ligne et/ou de la même colonne par un canal de communication formant étranglement,
      - chacun desdits canaux est conformé pour ralentir l'écoulement d'un fluide de gonflage qui les parcourt, ou cette structure incorpore des moyens conformés pour ralentir l'écoulement d'un fluide de gonflage des cellules à travers de chacun desdits canaux formant étranglement ;
      - et que, à l'état gonflé, le rapport entre la plus grande dimension de la section droite d'une cellule (2)) et la plus grande dimension de la section droite d'un canal (3) (D/d) est au moins égal à 10, de préférence au moins égal à 14.

Grâce à ces caractéristiques de l'invention, on a affaire à une structure d'épaisseur réduite, qui peut être déformée, c'est à dire pliée du fait que les cellules ne sont pas jointives, et qui présente d'excellentes qualités d'absorption des chocs, limitant ainsi le phénomène précité d'effet arrière.

Exprimé autrement, une telle structure est fine, souple, et légère. S'agissant d'une structure gonflable, il est nécessaire que la gestion du gonflage soit forte pour qu'elle soit bien gonflée et que la dissipation obtenue par le mouvement de l'air lors d'impact soit organisée et ralentie de proche en proche pour que la structure reste gonflée tout en freinant le choc.

Selon d'autres caractéristiques avantageuses et non limitatives de l'invention, prises seules ou selon une combinaison quelconque d'au moins deux d'entre elles :
- chaque cellule de ladite matrice communique avec chacune des cellules voisines de la même ligne et de la même colonne par un canal formant étranglement ;
- à l'exception des cellules de la ligne et/ou de la colonne périphérique raccordée audit embout de gonflage, les cellules restantes communiquent seulement avec deux des cellules voisines de la même ligne et/ou de la même colonne par un canal formant étranglement ;
- elle est pourvue d'un clapet d'échappement de surpression ;
- lesdites feuilles étanches sont en/à base de polyuréthane thermoplastique.
- lesdits canaux ont une forme sinueuse ;
- au moins certaines cellules contiennent, à une extrémité dudit canal, un volet basculant qui s'efface, c'est à dire s'escamote lors du passage dudit fluide de gonflage dans un sens d'écoulement, respectivement se plaque contre ladite extrémité dudit canal dans le sens opposé, contrariant ainsi le passage du fluide dans ledit canal ;
- une couche intermédiaire poreuse est intercalée entre lesdites deux feuilles étanches ;
- ladite couche intermédiaire est en/à base de polyuréthane thermoplastique.

L'invention concerne également un article notamment vestimentaire de protection contre les chocs, caractérisé par le fait qu'il est pourvu d'au moins une structure selon l'une des caractéristiques précédentes.

Avantageusement, l'article vestimentaire est choisi dans le groupe suivant : gilet pare-balle, plastron, veste, gilet, blouson, élément de protection corporelle.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, différents modes de réalisation possibles.

Sur ces dessins :
[Fig. 1] est une vue simplifiée de dessus d'une première forme de réalisation d'une structure cellulaire gonflable selon l'invention ;
[Fig. 2] est également une vue simplifiée de dessus d'une autre forme de cette structure, qui comprend ici deux matrices de cellules ;
[Fig. 3] est encore une vue de dessus d'une troisième forme de réalisation de ladite structure ;
[Fig. 4] est une vue partielle en coupe verticale d'une structure selon l'invention, destinée à montrer comment sont réunies les deux feuilles qui la constituent ;
[Fig. 5] est un schéma montrant, en coupe, deux cellules voisines communiquant par un canal formant étranglement ;
[Fig. 6] est un schéma analogue à celui de la figure 5, l'une des cellules présentant quatre canaux formant étranglement ;
[Fig. 7] est encore un schéma analogue à celui de la figure 5, dans lequel le canal reliant les deux cellules a une forme sinueuse ;
[Fig. 8] est une vue partielle en coupe d'une structure selon l'invention, dans laquelle une couche intermédiaire poreuse est intercalée entre les deux feuilles qui la constituent ;
[Fig. 9] est une vue partielle en coupe d'une structure selon l'invention dans laquelle deux cellules voisines contiennent un volet basculant à une extrémité du canal formant étrangement, montrant plus spécifiquement le comportement de ce volet dans un premier sens de circulation d'un fluide de gonflage ;
[Fig. 10] est une vue analogue à la précédente, le sens de circulation du fluide étant opposé au précédent ;
[Fig. 11] est un schéma destiné à illustrer une application possible de la structure selon l'invention.

### DESCRIPTION DETAILLEE DE L'INVENTION

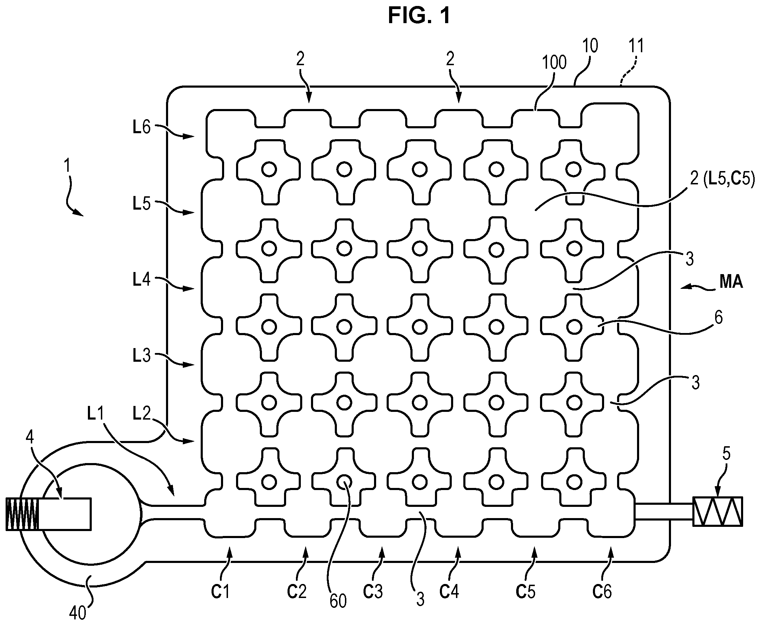

A la figure 1 annexée est représentée une structure cellulaire gonflable 1 d'absorption de chocs selon l'invention.

Cette figure, ainsi que toutes les autres, ont pour simple vocation d'illustrer l'invention. Cela signifie qu'elles ne reflètent pas la réalité, notamment en termes de dimensions, de formes et de proportions.

La structure 1 précitée est essentiellement constituée de deux feuilles étanches 10 et 11. Avantageusement, ces feuilles sont en matière plastique de haute résistance. Ainsi, une matière préférée dans le cadre de l'invention est un "TPU", c'est à dire un polyuréthane thermoplastique.

En plus de ses qualités de résistance même à épaisseur réduite, une telle matière se prête particulièrement bien à une soudure, notamment à la soudure à haute fréquence qui est une technique bien connue pour sa grande résistance.

Dans le mode de réalisation présenté ici, la structure 1 s'inscrit sensiblement dans un carré. Toutefois, il s'agit d'une forme non limitative de sorte que le contour de la structure peut avoir un tracé différent, par exemple rectangulaire. En pratique, ce tracé est adapté à la zone du corps que cette structure est amenée à protéger. Les deux feuilles 10 et 11 sont soudées l'une à l'autre selon des lignes de soudures 100 qui délimitent des cellules individuelles gonflables 2. On reviendra plus loin dans la description sur la manière dont on fabrique cette structure.

Selon l'invention, les cellules 2 sont agencées au sein de la structure 1 selon une matrice bidimensionnelle MA qui est constituée de n lignes et de m colonnes de cellules 2.

Dans l'exemple présenté ici, n et m sont égaux à 6. Il s'agit toutefois d'un exemple, de sorte que ces valeurs peuvent être différentes de six. En tout état de cause, selon l'invention, ces n et m sont des nombres entiers supérieurs ou égaux à 2. On peut bien entendu envisager que le nombre de cellules dans au moins une ligne et/ou colonne soit différent du reste des lignes et colonnes.

Dans les figures 1 à 3 annexées, les lignes sont référencées L1 à L6, tandis que les colonnes sont référencées C1 à C6. De cette manière, la cellule 2 (L2/C4) identifie la cellule à l'intersection de la ligne L2 et de la colonne C4.

A la figure 1, les cellules ont approximativement un contour en forme de carré à angle arrondis. Toutefois, toute autre forme (par exemple circulaire) peut être envisagée. De préférence, on évitera d'avoir recours à des formes anguleuses pour ne pas fragiliser les lignes de soudure 100.

Toujours selon l'invention, une cellule périphérique 2 de la matrice MA est raccordée à un embout de gonflage 4. Cet embout 4 est ici intégré au sein d'un appendice 40 qui est d'une seule pièce avec la structure 1. Autrement dit, cet appendice 40 est constitué de la réunion par soudure des feuilles 10 et 11. L'embout 4 est par exemple du type de ceux que l'on peut connecter à une pompe à main.

Par l'expression "cellule périphérique", on entend une des cellules les plus proches d'un des bords de la structure 1. Il s'agit ici de la cellule 2(L1/C1), mais il pourrait s'agir, dans un autre mode de réalisation, de la cellule 2(L1/C3) par exemple. Selon l'invention, les cellules de la ligne L1 à laquelle appartient la cellule 2 raccordée à l'embout de gonflage 4 communiquent de proche en proche, c'est à dire d'une cellule 2 à la cellule voisine 2, par un canal 3 formant étranglement. Dans l'ensemble du présent texte, on entend par le terme « canal » un petit conduit qui s'étend entre deux cellules, sans en faire partie. Du fait de la présence de ces canaux, les cellules sont non jointives car séparées par des canaux, de sorte que les lignes de soudures qui délimitent une cellule donnée sont différentes de celles qui délimitent une cellule voisine.

En pratique, le canal 3 est délimité, comme les cellules 2, par les lignes de soudure 100 précitées. Par le terme "étranglement", on entend que le dimensionnement en largeur de ce canal est très largement inférieur à celui des cellules 2 avec lesquelles il communique.

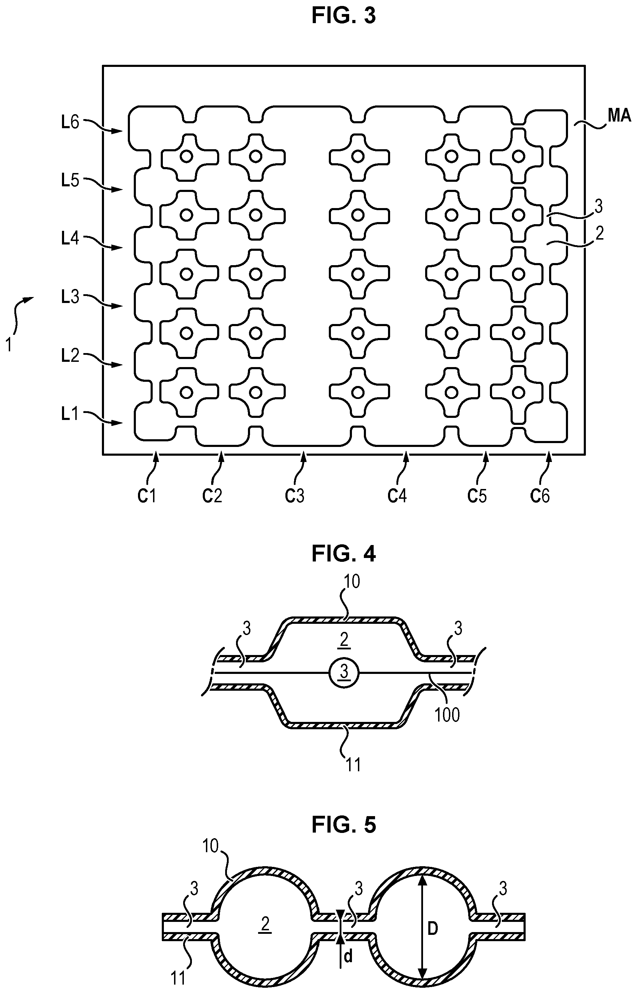

On peut se reporter à la figure 4 sur laquelle est visible non seulement une cellule 2 (sa forme a été volontairement stylisée), mais également trois canaux 3 à laquelle elle est raccordée, ainsi qu'une des lignes 100 de soudure qui la délimitent.

Selon le mode de réalisation de la figure 1, chaque cellule 2 de la ligne L1 communique avec les cellules 2 de la ligne L2 par des canaux 3 et ainsi de suite pour les autres lignes. Et il en est de même pour les colonnes, de sorte que chaque cellule 2 communique avec ses voisines des lignes et colonnes attenantes par un canal 3.

Dans ces conditions, dès lors que l'on fait rentrer dans la structure 1 un fluide de gonflage tel que de l'air, ce dernier peut se diffuser dans toutes les cellules selon des chemins aléatoires.

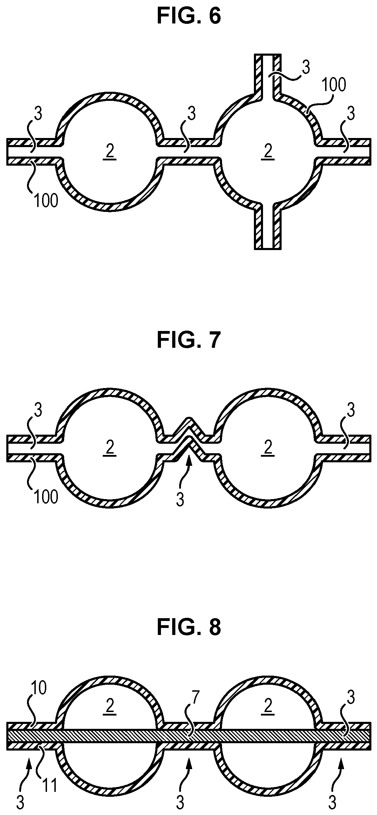

Si on se reporte maintenant à la figure 6, on constate que la capacité de la cellule 2 de droite à expulser de l'air est supérieure à celle de la cellule de gauche du fait du nombre plus important de canaux à laquelle elle est raccordée.

Du fait de la forme des cellules 2 et de leur organisation non jointives (en effet, elles sont distantes les unes des autres en raison de la présence des canaux 3), il existe à la croisée des cellules non périphériques des "plots" 6 en forme de générale de croix, dans lesquels les feuilles 10 et 11 ne sont pas solidaires. On notera ici, au centre de ces plots 6, l'existence d'orifices 60 qui font offices de trous de ventilation (caractère "respirant" de la structure) et dont certains autorisent la fixation de la structure 1 à un support.

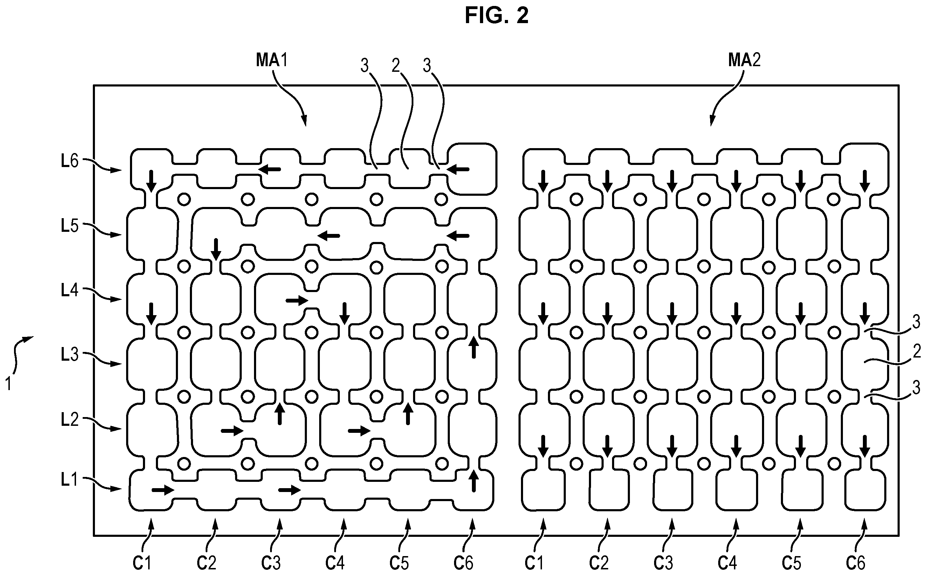

La présence de ces plots 6 à l'intersection des lignes et colonnes de cellules 2 autorise par ailleurs une certaine déformation de la structure 1 selon des directions perpendiculaires, par exemple en vue de sa fixation à un support non plan. Enfin, est également représenté à la figure 1 un clapet de surpression 5 relié à la cellule 2(L1/C6) qui, bien que non indispensable, permet de laisser s'échapper de l'air en cas de surpression (par exemple pour des raisons de gonflage excessif, de montée en température, de déplacement selon une altitude croissante, etc.). Dans l'exemple de la figure 2, on a affaire à une structure 1 qui est pourvue de deux matrices MA1 et MA2 disposées côte à côte.

Celles-ci présentent sensiblement la même "architecture" que la matrice M de la figure 1. Toutefois, elles s'en différencient par le nombre et la disposition des canaux 3 reliant les cellules.

Ainsi, en considérant la matrice M1 et en supposant que l'embout de gonflage (non représenté) soit connecté à la cellule 2(L6/C6), les cellules communiquent de proche en proche dans la ligne L6. En revanche, seule la cellule 2(L6, C1) communique avec la cellule voisine de la ligne L5 et on constate de proche en proche que les canaux 3 sont présents seulement pour assurer une communication entre les cellules 2 selon une organisation en spirale ou sensiblement en spirale. Dans ces conditions et en considérant par exemple que la cellule 2(L4/C5) subisse un impact suffisant pour qu'elle se déforme, l'air qui y est stocké ne peut circuler que par le canal 3 qui la relie à la cellule 2(L3/C5). On comprend aisément que sa capacité à se déformer est moindre par rapport à la même cellule 2(L4/C5) de la structure 1 de la figure 1, laquelle communique avec toutes ses voisines par quatre canaux.

Dans ces conditions, on préfèrera utiliser une matrice M1 dans des situations dans lesquels la structure subit des chocs rapides et violents, telles que des situations de contexte militaire, par exemple de guerre, d'émeutes, etc. A contrario, la structure 1 de la figure 1 sera plutôt utilisée pour des chocs moins violents tels que ceux rencontrés lors de la pratique de sports.

Au sein de la matrice M2 de la figure 2, les cellules communiquent de proche en proche dans la ligne L6. Toutefois, la communication avec les celles restantes se fait exclusivement selon l'orientation des colonnes C1 à C6. Dans cette configuration, la capacité des cellules 2 à se déformer est sensiblement la même que dans la structure de la matrice M1.

Dans le mode de réalisation de la figure 3 (où l'embout de gonflage n'a pas été représenté), on a affaire à une disposition des cellules 2 et des canaux 3 analogue à celle de la matrice de la figure 1.

On constate toutefois que la taille des cellules 2 des colonnes C3 et C4 est plus importante que celle des autres cellules.

Ceci s'explique par exemple par la morphologie ou par la région du corps qu'une telle structure est destinée à protéger. Ainsi, par exemple, cette structure est destinée à recouvrir le dos d'un individu, de sorte que les cellules 2 de plus grande taille des colonnes C3 et C4 recouvriront la région vertébrale.

La situation représentée à la figure 5 est une vue de l'esprit. Plus précisément, on y a représenté deux cellules 2 voisines reliées par un canal 3 et on considère que la structure dans laquelle elles sont intégrées a été gonflée au maximum. Dans une telle situation, on considère qu'aussi bien les cellules 2 et les canaux 3 occupent un volume maximum.

Artificiellement, on considère ici que la section droite des cellules 2 et des canaux 3 sont circulaires et on a référencé D et d leur diamètre. En réalité, ces sections ne sont pas strictement circulaires. En langage imagé, ces sections ressemblent plutôt à un ballon de rugby. Dans ces conditions, les valeurs D et d correspondent à la plus grande dimension de leur section.

Selon l'invention, le rapport D/d est au moins égal à 10, de préférence au moins égal à 14. Ainsi, les dimensions des canaux 3 sont suffisamment grandes pour permettre de gonfler la structure 1, mais suffisamment petites pour contrarier, c'est à dire limiter l'échappement d'air vers les cellules voisines en cas de chocs. On peut également envisager d'autres moyens pour limiter /contrarier cet échappement de l'air.

Ainsi, conformément au mode de réalisation de la figure 7, on a affaire à des canaux 3 dont le tracé est sinueux. Dans ces conditions, on comprend que lors du gonflage de la structure aussi bien que lors d'un impact, l'air est forcé de circuler dans les canaux 3 pour atteindre les cellules. Toutefois, cette circulation est contrariée par les différentes chicanes résultant de la sinuosité. En pratique, lors d'un impact, les cellules 2 se déforment, mais relativement peu, de sorte que l'onde de chocs n'est que très partiellement transmise. En d'autres termes, la structure 1 n'est ni complètement rigide, ni trop dégonflée.

Dans le cas du mode de réalisation de la figure 8, on a affaire à une couche intermédiaire poreuse 7 qui est intercalée entre les feuilles 10 et 11. En pratique, la nature et l'épaisseur de cette couche doivent être choisies pour qu'elle soit prise en sandwich et soudée en même temps que lesdites feuilles. Avantageusement, cette couche sera de même nature que les feuilles 10 et 11 et aura une structure cellulaire à cellules ouvertes de manière à être poreuse pour laisser passer l'air. Mais comme dans le mode de réalisation précédent, cette circulation est relativement contrariée.

Grâce à l'invention, le fait que les cellules soient non jointives permet de donner une excellente déformabilité à la structure. Par ailleurs, en raison de la présence de canaux entre ces cellules et conformément à l'ensemble des modes de réalisation décrit, on parvient à ralentir de manière efficace le déplacement du fluide entre les cellules, de sorte que l'onde de chocs transmise par les cellules ciblées n'est que partiellement transmise dans la région environnante.

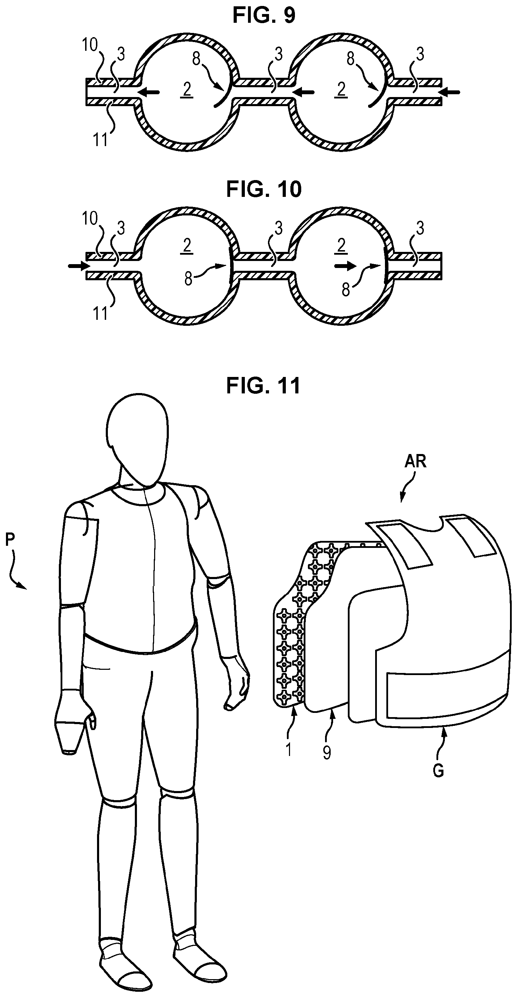

Dans la variante de réalisation des figures 9 et 10, les cellules 2 présentent la particularité de comporter un volet basculant 8 qui est fixé à la paroi d'une des feuilles 10 et 11 et qui s'étend à l'extrémité d'un des canaux 3. Ainsi, lorsque l'air circule de droite à gauche comme montré sur la figure 9, le flux d'air est suffisant pour que chaque volet 8 s'escamote et ne s'oppose pas à ce dernier. En revanche, en cas de circulation dans le sens contraire, chaque volet vient se plaquer contre l'extrémité du canal 3, obturant au moins partiellement celui-ci. En pratique, il peut s'agir d'une languette, par exemple de forme ovale, qui est soudée à une paroi de la cellule 2 en regard du canal 3 et qui vient obstruer ce dernier dès qu'une pression est exercée sur la cellule.

Enfin, est représenté de manière très simplifiée à la figure 11 un individu P que l'on se propose d'équiper d'un article vestimentaire AR. Ce dernier est constitué (de droite à gauche sur la figure) d'un gilet pare-balle G, d'un bouclier de tension 9 et d'une structure 1 conforme à la présente invention.

Bien entendu, dans une variante non représentée, la structure selon l'invention peut être simplement glissée à l'intérieur d'un vêtement.

On notera que l'organisation des cellules 2 selon une matrice bidimensionnelle permet d'adapter le design de cette matrice en fonction de l'article vestimentaire que l'on souhaite équiper.

A titre indicatif, une telle structure, en fonction de l'usage que l'on veut en faire, se prête à un gonflage compris entre 10 et 30 PSI, c'est à dire d'environ 0.7 à 2 bar, ce qui autorise l'usage d'une pompe à main (ou encore d'un mini-compresseur ou d'une poire de gonflage).

Cette structure s'adapte à un impact de poids léger à très haute vitesse (balistique) mais aussi à un impact à poids lourd et à très faible vitesse (chute lors de la pratique de sports extrêmes) grâce à la large possibilité de réglage de la pression due à sa résistance.

Les différentes étapes d'un exemple de fabrication d'une structure selon l'invention peuvent se résumer comme suit :
1/ Définir la résistance du débit d'air à la sortie des cellules suivant le choc visé. A titre d'exemple, on peut envisager un impact de 200 joules conduisant à une force transmise de 12000 newtons, ou un impact de 50 Joules conduisant à une force transmise de 4000 newtons. En pratique, on réalise par exemple un tir à 200 joules, on observe une performance "X" avec un canal 3 de géométrie simple. Ensuite, on réalise le même test avec un autre design de canal et on suppose ici que la performance "Y' est acceptable. On en déduit alors la meilleure configuration pour l'application envisagée.
2/ Tarage de la valve de surpression 5 ;
3/ Dessins de la forme de canaux 3 ;
4/ Réalisation du moule pour la soudure HF ;
5/ Soudure des feuilles de TPU suivant leur épaisseur ;
6/ Gonflage à l'aide de la pompe à main ;
7/ Validation au choc et à la mesure à l'aide d'un capteur / de la pâte à modeler connue sous l'appellation "plastiline" / par le "test du cochon" (mesure de l'effet arrière cardiaque sur sujet vivant).

Ce dernier test consiste à mettre l'animal dans une situation de mort cérébrale, à le sonder puis à mesurer le changement de rythme cardiaque consécutif au tir lors du tir on peut mesurer son rythme cardiaque, et d'autres réactions.

Dans l'ensemble de la description qui précède, on a envisagé que le fluide utilisé pour gonfler les cellules soit de l'air. Mais on peut également faire usage d'un liquide tel que de l'eau.

## Revendications

1. Structure cellulaire gonflable (1) d'absorption de chocs qui est constituée de deux feuilles (10,11) étanches soudées l'une à l'autre selon des lignes de soudure (100) qui délimitent des cellules gonflables (2),
- lesdites cellules gonflables (2) étant agencées selon au moins une matrice bidimensionnelle (MA,MA1,MA2) de n lignes (L1-L6) et m colonnes (C1-C6) de cellules (2), n et m étant des nombres entiers égaux ou différents, chacun supérieur ou égal à 2 ;
- une cellule périphérique (2) de ladite matrice (MA,MA1,MA2) est raccordée à un embout de gonflage (4) ; conçue de manière à que :
- lesdites cellules (2) sont non jointives ;
- les cellules (2) de la ligne et/ou de la colonne à laquelle appartient ladite cellule périphérique (2) raccordée audit embout de gonflage (4) communiquent de proche en proche par un canal (3) formant étranglement ce canal (3) étant un petit conduit qui s'étend entre deux cellules, sans en faire partie, tandis que chaque cellule restante (2) de ladite matrice (MA,MA1,MA2) est également raccordée à au moins une des cellules voisines (2) de la même ligne et/ou de la même colonne par un canal (3) de communication formant étranglement,
- chacun desdits canaux (3) est conformé pour ralentir l'écoulement d'un fluide de gonflage qui les parcourt, ou ladite structure incorpore des moyens conformés pour ralentir l'écoulement d'un fluide de gonflage des cellules (2) à travers lesdits canaux (3) formant étranglement ;
- et que, à l'état gonflé, le rapport entre la plus grande dimension de la section droite d'une cellule (2)) et la plus grande dimension de la section droite d'un canal (3) (D/d) est au moins égal à 10, de préférence au moins égal à 14.

2. Structure (1) selon la revendication 1, **caractérisée par le fait que** chaque cellule (2) de ladite matrice (MA,MA1,MA2) communique avec chacune des cellules voisines (2) de la même ligne et de la même colonne par un canal (3) formant étranglement.

3. Structure (1) selon la revendication 1, **caractérisée par le fait que**, à l'exception des cellules (2) de la ligne et/ou de la colonne périphérique raccordée audit embout de gonflage (4), les cellules restantes (2) communiquent seulement avec deux des cellules voisines (2) de la même ligne et/ou de la même colonne par un canal (3) formant étranglement.

4. Structure (1) selon l'une des revendications précédentes, **caractérisée par le fait qu'**elle est pourvue d'un clapet (5) d'échappement de surpression.

5. Structure (1) selon l'une des revendications précédentes, **caractérisée par le fait que** lesdites feuilles étanches (10,11) sont en/à base de polyuréthane thermoplastique.

6. Structure (1) selon l'une des revendications 1 à 5, **caractérisée par le fait que** lesdits canaux (3) ont une forme sinueuse.

7. Structure (1) selon l'une des revendications 1 à 6, **caractérisée par le fait qu'**au moins certaines cellules (2) contiennent, à une extrémité dudit canal (3), un volet basculant (8) qui s'efface, c'est à dire s'escamote lors du passage dudit fluide de gonflage dans un sens d'écoulement, respectivement se plaque contre ladite extrémité dudit canal (3) dans le sens opposé, contrariant ainsi le passage du fluide dans ledit canal.

8. Structure (1) selon l'une des revendications 1 à 7, **caractérisée par le fait qu'**une couche intermédiaire poreuse (7) est intercalée entre lesdites deux feuilles étanches (10,11).

9. Structure (1) selon la revendication 8, **caractérisée par le fait que** ladite couche intermédiaire (7) est en/à base de polyuréthane thermoplastique.

10. Article (AR) notamment vestimentaire de protection contre les chocs, **caractérisé par le fait qu'**il est pourvu d'au moins une structure (1) selon l'une des revendications précédentes.

11. Article vestimentaire (AR) selon la revendication 10, **caractérisé par le fait qu'**il est choisi dans le groupe suivant : gilet pare-balle, plastron, veste, gilet, blouson, élément de protection corporelle.

## Patentansprüche

1. Aufblasbare zellulare Struktur (1) zur Stoßdämpfung, die aus zwei dichten Folien (10,11) besteht, die entlang von Schweißlinien (100) miteinander verschweißt sind, welche aufblasbare Zellen (2) begrenzen,
- wobei die aufblasbaren Zellen (2) in mindestens einer zweidimensionalen Matrix (MA,MA1,MA2) aus n Zeilen (L1-L6) und m Spalten (C1-C6) von Zellen (2) angeordnet sind, wobei n und m gleiche oder unterschiedliche ganze Zahlen sind, die jeweils größer oder gleich 2 sind;
- eine Randzelle (2) der besagten Matrix (MA, MA1, MA2) mit einem Aufblasstutzen (4) verbunden ist;
so ausgelegt, dass:
- die besagten Zellen (2) nicht aneinandergrenzend sind;
- die Zellen (2) der Zeile und/oder der Spalte, zu der die an den Aufblasstutzen (4) angeschlossene Randzelle (2) gehört, über einen eine Verengung bildenden Kanal (3) miteinander verbunden sind, wobei dieser Kanal (3) ein kleiner Durchgang ist, der sich zwischen zwei Zellen erstreckt, ohne Teil davon zu sein, während jede verbleibende Zelle (2) der Matrix (MA, MA1, MA2) ebenfalls über einen eine Verengung bildenden Verbindungskanal (3) mit mindestens einer der benachbarten Zellen (2) derselben Zeile und/oder derselben Spalte verbunden ist,
- wobei jeder der besagten Kanäle (3) so ausgebildet ist, dass er den Fluss eines durch ihn strömenden Aufblasfluids verzögert, oder wobei die besagte Struktur Mittel umfasst, die so ausgebildet sind, dass sie den Fluss eines Aufblasfluids aus den Zellen (2) durch die besagten, eine Verengung bildenden Kanäle (3) verzögern;
- und dass im aufgeblasenen Zustand das Verhältnis (D/d) zwischen der größten Abmessung des Querschnitts einer Zelle (2) und der größten Abmessung des Querschnitts eines Kanals (3) mindestens 10, vorzugsweise mindestens 14, beträgt.

2. Struktur (1) nach Anspruch 1, **dadurch gekennzeichnet, dass** jede Zelle (2) der Matrix (MA, MA1, MA2) mit jeder der benachbarten Zellen (2) derselben Zeile und derselben Spalte über einen eine Verengung bildenden Kanal (3) in Verbindung steht.

3. Struktur (1) nach Anspruch 1, **dadurch gekennzeichnet, dass** mit Ausnahme der Zellen (2) der Randzeile und/oder -spalte, die mit dem genannten Aufblasstutzen (4) verbunden sind, die übrigen Zellen (2) nur mit zwei benachbarten Zellen (2) derselben Zeile und/oder derselben Spalte über einen eine Verengung bildenden Kanal (3) in Verbindung stehen.

4. Struktur (1) nach einem der vorstehenden Ansprüche, **dadurch gekennzeichnet, dass** sie mit einem Überdruckventil (5) versehen ist.

5. Struktur (1) nach einem der vorstehenden Ansprüche, **dadurch gekennzeichnet, dass** die besagten dichten Folien (10, 11) aus/auf Basis von thermoplastischem Polyurethan bestehen.

6. Struktur (1) nach einem der Ansprüche 1 bis 5, **dadurch gekennzeichnet, dass** die Kanäle (3) eine gewundene Form aufweisen.

7. Struktur (1) nach einem der Ansprüche 1 bis 6, **dadurch gekennzeichnet, dass** zumindest einige Zellen (2) an einem Ende des Kanals (3) eine Klappe (8) enthalten, die sich beim Durchströmen des Aufblasfluids in einer Strömungsrichtung zurückzieht, d.h. sich einfahrt, bzw. sich in der entgegengesetzten Richtung an das Ende des Kanals (3) anlegt und so den Durchfluss des Fluids durch den Kanal verhindert.

8. Struktur (1) nach einem der Ansprüche 1 bis 7, **dadurch gekennzeichnet, dass** eine poröse Zwischenschicht (7) zwischen den beiden dichten Folien (10, 11) angeordnet ist.

9. Struktur (1) nach Anspruch 8, **dadurch gekennzeichnet, dass** die Zwischenschicht (7) aus/auf Basis von thermoplastischem Polyurethan besteht.

10. Artikel (AR), insbesondere Schutzkleidung gegen Stöße, **dadurch gekennzeichnet, dass** er mit mindestens einer Struktur (1) nach einem der vorstehenden Ansprüche versehen ist.

11. Kleidungsartikel (AR) nach Anspruch 10, **dadurch gekennzeichnet, dass** es aus der folgenden Gruppe ausgewählt ist: kugelsichere Weste, Brustpanzer, Jacke, Weste, Blouson, Körperschutzelement.

## Claims

1. An inflatable shock-absorbing cellular structure (1) which consists of two sealed sheets (10, 11) welded to each other along weld lines (100) which delimit inflatable cells (2),
- said inflatable cells (2) being arranged in at least one two-dimensional matrix (MA, MA1, MA2) of n rows (L1-L6) and m columns (C1-C6) of cells (2), n and m being equal or different integers, each greater than or equal to 2;
- a peripheral cell (2) of said matrix (MA, MA1, MA2) is connected to an inflation nozzle (4);
designed so that:
- said cells (2) are not contiguous;
- the cells (2) of the row and/or of the column to which said peripheral cell (2) connected to said inflation nozzle (4) belongs, communicate step by step via a channel (3) forming a constriction this channel (3) being a small passage that extends between two cells without being part of them, while each remaining cell (2) from said matrix (MA, MA1, MA2) is also connected to at least one of the neighboring cells (2) of the same row and/or of the same column by a communication channel (3) forming a constriction,
- each of said channels (3) is shaped to slow down the flow of an inflation fluid passing therethrough, or said structure incorporates means shaped to slow down the flow of a fluid for inflating the cells (2) through said channels (3) forming a constriction;
- and that in the inflated state, the ratio (D/d) between the largest dimension of the cross section of a cell (2) and the largest dimension of the cross section of a channel (3) is at least equal to 10, preferably at least equal to 14.

2. The structure (1) according to claim 1, **characterized in that** each cell (2) of said matrix (MA, MA1, MA2) communicates with each of the neighboring cells (2) of the same row and of the same column by a channel (3) forming a constriction.

3. The structure (1) according to claim 1, **characterized in that**, with the exception of the cells (2) of the peripheral row and/or column connected to said inflation nozzle (4), the remaining cells (2) communicate only with two of the neighboring cells (2) of the same row and/or of the same column by a channel (3) forming a constriction.

4. The structure (1) according to one of the preceding claims, **characterized in that** it is provided with an overpressure exhaust valve (5).

5. The structure (1) according to one of the preceding claims, **characterized in that** said sealed sheets (10, 11) are made of/based on thermoplastic polyurethane.

6. The structure (1) according to one of claims 1 to 5, **characterized in that** said channels (3) have a sinuous shape.

7. The structure (1) according to one of claims 1 to 6, **characterized in that** at least some cells (2) contain, at one end of said channel (3), a tilting flap (8) which disappears that is to say retracts during the passage of said inflation fluid in a flow direction, respectively presses against said end of said channel (3) in the opposite direction, thus impeding the passage of the fluid in said channel.

8. The structure (1) according to one of claims 1 to 7, **characterized in that** a porous intermediate layer (7) is interposed between said two sealed sheets (10, 11).

9. The structure (1) according to claim 8, **characterized in that** said intermediate layer (7) is made of/based on thermoplastic polyurethane.

10. An item (AR), in particular a protective clothing item, for protection against shocks, **characterized in that** it is provided with at least one structure (1) according to one of the preceding claims.

11. The clothing item (AR) according to claim 10, **characterized in that** it is chosen from the following group: bulletproof vest, breastplate, jacket, waistcoat, coat, body protective element.
